# EUROPÄISCHE PATENTSCHRIFT

(11) **EP 3 332 134 B1**
(45) Veröffentlichungstag und Bekanntmachung des Hinweises auf die Patenterteilung: **26.06.2019**
(21) Anmeldenummer: 16766841.7
(22) Anmeldetag: 03.08.2016
(51) Int. Cl.: F16C 19/36, F16C 33/58, F16C 33/36, F16C 43/06, F16C 43/08, F16C 19/22, F16C 33/46, F16C 33/49

(54) **SCHRÄGROLLENLAGER SOWIE VERFAHREN UND VORRICHTUNG ZU DESSEN MONTAGE**
ANGULAR CONTACT ROLLER BEARING AND METHOD AND DEVICE FOR THE ASSEMBLY THEREOF
ROULEMENT À ROULEAUX À CONTACT OBLIQUE AINSI QUE PROCÉDÉ ET DISPOSITIF POUR SON MONTAGE

(30) Priorität: 04.08.2015 DE 102015214847
(43) Veröffentlichungstag der Anmeldung: 13.06.2018
(73) Patentinhaber: Schaeffler Technologies AG & Co. KG, 91074 Herzogenaurach (DE)
(72) Erfinder: HOFMANN, Heinrich, 97422 Schweinfurt (DE); EIDLOTH, Rainer, 91074 Herzogenaurach (DE); RUMPEL, Reinhard, 97228 Rottendorf (DE)
(86) Internationale Anmeldenummer: PCT/DE2016/200353
(87) Internationale Veröffentlichungsnummer: WO 2017/020905

(56) Entgegenhaltungen:
- DE-A1- 2 154 545
- DE-A1- 2 420 210
- DE-A1- 2 651 827
- DE-U1- 8 713 057
- JP-U- S58 130 120
- US-A- 1 397 142

## Beschreibung

### Gebiet der Erfindung

Die Erfindung betrifft ein insbesondere einreihiges Schrägrollenlager nach den oberbegriffsbildenden Merkmalen des Patentanspruchs 1, welches insbesondere vorteilhaft zur Lagerung der Kurbelwelle in einem Kraftfahrzeug-Verbrennungsmotor anwendbar ist. Darüber hinaus betrifft die Erfindung zwei Varianten eines Verfahrens und einer Vorrichtung zur Montage des Schrägrollenlagers.

### Hintergrund der Erfindung

Der für die Lagerung der Kurbelwelle in Kraftfahrzeug-Verbrennungsmotoren am häufigsten verwendete Lagertyp ist das einreihige Rillenkugellager, da dieses sich durch eine gleichermaßen hohe radiale und axiale Tragfähigkeit auszeichnet und wegen seiner geringen Reibung die höchsten Drehzahlgrenzen aller Lagerarten aufweist. Dieses Rillenkugellager besteht in bekannter Weise aus einem äußeren Lagerring und einem inneren Lagerring sowie aus einer Vielzahl zwischen den Lagerringen angeordneter Lagerkugeln, die in in die Innenseite des äußeren Lagerrings und in die Außenseite des inneren Lagerrings eingearbeitete rillenförmigen Laufbahnen abrollen und durch einen Lagerkäfig in gleichmäßigen Abständen zueinander geführt werden. Das Einsetzten der Lagerkugeln in das Rillenkugellager erfolgt dabei zumeist durch das mit der DE 168 499 A1 bekannt gewordene Exzentermontageverfahren, bei dem die beiden Lagerringe exzentrisch zueinander angeordnet werden und der dadurch entstehende freie Raum zwischen den Lagerringen mit den Lagerkugeln befüllt wird, anschließend die Lagerringe unter Ausnutzung ihrer Elastizität in eine konzentrische Stellung zueinander gebracht werden und nach einer gleichmäßigen Umfangsverteilung der Lagerkugeln der Lagerkäfig eingesetzt wird.

In der Praxis hat es sich jedoch erwiesen, dass derartigen Rillenkugellagern aufgrund der geringen maximal einbaubaren Anzahl von Lagerkugeln, die von den Abmessungen des inneren und des äußeren Lagerrings sowie vom Durchmesser der Lagerkugeln abhängig ist, vor allem in Bezug auf die radiale Tragfähigkeit des Lagers immer gewisse Grenzen gesetzt sind. In der Vergangenheit wurden daher eine Vielzahl von Lösungen, wie beispielsweise eine in den sich gegenüberliegenden Borden der Laufbahnen des äußeren und des inneren Lagerrings angeordnete unverschlossene Einfüllöffnung gemäß DE 151 483 A1 oder eine ähnlich ausgebildete verschließbare Einfüllöffnung gemäß DE 24 07 477 A1, vorgeschlagen, mit denen durch eine Erhöhung der Anzahl der Lagerkugeln eine Erhöhung der radialen Tragfähigkeit von Rillenkugellagern erreicht werden sollte, die sich aber aufgrund der aus solchen Einfüllöffnungen resultierenden Nachteile in der Praxis nicht durchsetzen konnten.

Eine andere naheliegende Möglichkeit, die Tragfähigkeit der Lagerung der Kurbelwelle in einem Kraftfahrzeug-Verbrennungsmotor zu erhöhen, wäre der Ersatz des bisher verwendeten Rillenkugellagers durch ein Zylinderrollenlager vom Typ NUP, wie es beispielsweise aus dem Katalog "Wälzlager" der Anmelderin vom Oktober 2008 auf den Seiten 393 und 396 bekannt ist. Dieses Zylinderrollenlager weist sowohl am inneren Lagerring als auch am äußeren Lagerring zwei seitliche Borde auf und ist zur Aufnahme hoher Radiallasten sowie von Axiallasten in beide Richtungen geeignet. Derartige Zylinderrollenlager weisen jedoch durch den hohen Anteil spanender Bearbeitung, insbesondere bei der Laufbahnherstellung und bei der Bordbearbeitung, sehr hohe Fertigungskosten auf und wären zudem in ihrer Tragfähigkeit wiederum überdimensioniert, so dass diese für den Einsatz als Festlager in Kraftfahrzeug-Schaltgetrieben letztendlich ungeeignet sind.

Ein weiterer, zur Lagerung der Kurbelwelle in einem Kraftfahrzeug-Verbrennungsmotor geeigneter und für die vorliegende Erfindung den nächstliegenden Stand der Technik bildender Lagertyp, dessen Aufnahmefähigkeit von Radialkräften und von Axialkräften in beide Richtungen größer als die von Rillenkugellagern ist, ist durch die Druckschriften DE 6 917 609 U und CH 463 886 A bekannt geworden. In diesen Druckschriften wird jeweils ein Schrägrollenlager offenbart, welches im Wesentlichen aus einem inneren Lagerring mit einer an dessen äußerer Mantelfläche schräg zur radialen Lagerachse angeordneten inneren Laufbahn und einem diese Laufbahn an ihrem kleinsten Durchmesser begrenzenden Bord, aus einem äußeren Lagerring mit einer an dessen innerer Mantelfläche ebenfalls schräg zur radialen Lagerachse angeordneten äußeren Laufbahn und einem diese Laufbahn an ihrem größten Durchmesser begrenzenden Bord sowie aus einer Vielzahl zwischen den Lagerringen angeordneter und auf deren Laufbahnen abrollender Rollenwälzkörper besteht, die in Umfangsrichtung durch einen Lagerkäfig in gleichmäßigen Abständen zueinander gehalten werden. Zur Ermöglichung des Einsetzens der als Kegelrollen ausgebildeten Wälzkörper in den jeweils als Taschen- bzw. als Fensterkäfig ausgebildeten Lagerkäfig ist bei dem Schrägrollenlager gemäß DE 6 917 609 U der Bord am inneren Lagerring und bei dem Schrägrollenlager gemäß CH 463 886 A der Bord am äußeren Lagerring als separates Bauteil ausgebildet, der nach der Lagermontage am inneren bzw. äußeren Lagerring befestigt wird. Dies erfolgt bei dem Schrägrollenlager gemäß DE 6 917 609 U durch einen gesonderten geschlitzten, im Querschnitt U-förmigen Ring, dessen radiale Schenkel in entsprechende Nuten im Bord und im inneren Lagerring eingreifen, und bei dem Schrägrollenlager gemäß CH 463 886 A durch einen an die Unterseite des Bordes angeformten umlaufenden Bund, der in den äußeren Lagerring eingepresst wird.

Bei derartigen Schrägrollenlagern sind zwar dadurch, dass nur noch einer der Lagerringe mit nur noch einem seitlichen Bord einteilig ausgebildet ist, der Anteil der spanenden Bearbeitung bei der Laufbahnherstellung und bei der Bordbearbeitung und damit auch die Gesamtkosten für die Lagerfertigung wesentlich geringer als bei dem vorbeschriebenen Zylinderrollenlager, dennoch wirkt sich bei diesen Schrägrollenlagern die Ausbildung des Bordes am jeweils anderen Lagerring als separate Bordscheibe, deren zusätzliche Montage an diesem Lagerring sowie die erforderliche Präzisionsfertigung der Anlageflächen an diesen und dem zugehörigen Lagerring ungünstig auf deren Herstellungskosten aus. Außerdem besteht bei diesen Schrägrollenlagern die Gefahr, dass die Befestigung der separaten Bordscheibe nicht ausreichend ist, um auch hohen radialen oder axialen Belastungsspitzen standzuhalten, so dass sich die Bordscheibe im Lagerbetrieb lösen kann und es letztendlich zum Lagerausfall kommt. Aus der DE 87 13 057 U ist ein Schrägrollenlager mit einstückig mit den Lagerringen ausgebildeten und die Laufbahnen jeweils einseitig begrenzenden Borden bekannt.

### Aufgabe der Erfindung

Ausgehend von den dargelegten Nachteilen der Lösungen des bekannten Standes der Technik liegt der Erfindung deshalb die Aufgabe zu Grunde, ein insbesondere einreihiges Schrägrollenlager, zu konzipieren, welches eine höhere radiale und axiale Tragfähigkeit als ein Rillenkugellager aufweist und sich durch einen niedrigen Anteil der spanenden Bearbeitung bei der Laufbahn- und Bordherstellung sowie durch einen niedrigen Montageaufwand und damit durch geringe Gesamtkosten für die Lagerfertigung auszeichnet.

### Beschreibung der Erfindung

Erfindungsgemäß wird diese Aufgabe bei einem Schrägrollenlager nach dem Oberbegriff des Anspruchs 1 zunächst derart gelöst, dass die äußere Mantelfläche des inneren Lagerrings und die innere Mantelfläche des äußeren Lagerrings jeweils außerhalb der Laufbahnen zumindest abschnittsweise koaxial zur Lagerrotationsachse verlaufend zylindrisch ausgebildet und die Laufbahnen beider Lagerringe jeweils kegelförmig in die Mantelflächen eingearbeitet sind und dass die dabei entstehenden und die Laufbahnen jeweils einseitig begrenzenden Borde dadurch jeweils einteilig mit den Lagerringen ausgebildet sind.

Bevorzugte Ausgestaltungen und vorteilhafte Weiterbildungen des erfindungsgemäß ausgebildeten Schrägrollenlagers werden in den Unteransprüchen 2 bis 8 beschrieben.

Danach ist es gemäß Anspruch 2 bei dem erfindungsgemäß ausgebildeten Schrägrollenlager vorgesehen, dass die Rollenwälzkörper bevorzugt als Kegelrollen ausgebildet sind, die einen Kegelwinkel im Bereich von 1° bis 4° aufweisen und in einem Hüllkreiswinkel zwischen 3° bis 7° auf ihren Laufbahnen abrollen. Bei Anwendung des erfindungsgemäß ausgebildeten Radialwälzlagers zur Lagerung der Kurbelwelle in einem Kraftfahrzeug-Verbrennungsmotor haben sich dabei aufgrund der auftretenden Radial- und Axiallasten ein Kegelwinkel von 1,5° bis 2,5°, bevorzugt 2°, und ein Hüllkreiswinkel von 5,5° bis 6,5°, bevorzugt 6°, als besonders geeignet erwiesen. Es ist jedoch anzumerken, dass die erfindungsgemäße Ausbildung nicht auf ein Kegelrollenlager beschränkt sein soll, da in gleicher Weise auch andere Rollenlager mit schräg zur Lagermittelachse angeordneten Rollenachsen derart ausgebildet werden können. So können anstelle der beispielhaft angeführten Kegelrollen auch Zylinderrollen oder Nadeln oder Rollen mit sphärischen Mantelflächen, wie Pendel- oder Tonnenrollen, verwendet werden.

Nach Anspruch 3 ist es ein weiteres Merkmal des erfindungsgemäß ausgebildeten Schrägrollenlagers, dass der Spalt zwischen der äußeren Mantelfläche des inneren Lagerrings und der inneren Mantelfläche des äußeren Lagerrings so bemessen ist, dass das Zweifache seines Maßes größer als der größte Durchmesser der Rollenwälzkörper ist. Eine solche Dimensionierung des Spaltes zwischen dem inneren und dem äußeren Lagerring ist notwendig, um das Einsetzen der Rollenwälzkörper in das Schrägrollenlager nach dem im Anschluss beschriebenen Montageverfahren zu ermöglichen.

Gemäß Anspruch 4 zeichnet sich das erfindungsgemäß ausgebildete Schrägrollenlager darüber hinaus noch dadurch aus, dass sowohl der die Laufbahn im inneren Lagerring begrenzende Bord als auch der die Laufbahn im äußeren Lagerring begrenzende Bord eine gleiche Mindesthöhe von 18% bis 22%, bevorzugt ca. 20%, des größten Durchmessers der Rollenwälzkörper aufweisen. Durch eine solche Ausbildung der Borde und der damit einhergehenden Laufbahntiefe ist gewährleistet, dass im Lagerbetrieb auftretende hohe Axialkräfte in die eine Richtung mit möglichst geringer Bordreibung aufgenommen werden können, während geringere Axialkräfte in die andere Richtung über die schrägen Laufbahnen aufgenommen werden.

Eine zweckmäßige Weiterbildung des erfindungsgemäß ausgebildeten Schrägrollenlagers ist es nach den Ansprüchen 5, 6 und 7 desweiteren, dass der Lagerkäfig bevorzugt durch einen nach der Montage der Rollenwälzkörper in das Schrägrollenlager einsetzbaren und aus einem Käfigring sowie aus einer Vielzahl von axialen Käfigstegen bestehenden Kammkäfig gebildet wird. Dieser Lagerkäfig weist an seinen Käfigstegen zusätzlich mehrere gleichmäßig umfangsverteilte Raststege auf, durch die der Lagerkäfig entweder an der Innenfläche des Bordes am äußeren Lagerring oder an der Innenfläche des Bordes am inneren Lagerring axial lagefixierbar ist. Diese Raststege sind analog zu den Rollenachsen der Rollenwälzkörper geneigt zur Lagermittelachse an die Käfigstege angeformt und werden beim Einsetzen des Lagerkäfigs in das Schrägrollenlager zunächst solange elastisch in Richtung der Käfigstege verformt, bis diese mit ihren freien Enden beim Einsetzen des Lagerkäfigs von der großen Durchmesserseite der Kegelrollen her hinter den Bord am äußeren Lagerring und beim Einsetzen des Lagerkäfigs von der kleinen Durchmesserseite der Kegelrollen her hinter dem Bord am inneren Lagerring einrasten. Dadurch wird der durch das Anliegen des Lagerkäfigs an den einen Stirnseiten der Rollenwälzkörper bisher nur in die eine Axialrichtung lagefixierte Lagerkäfig auch in die andere Axialrichtung lagefixiert. Auch hier ist jedoch zu bemerken, dass die Verwendung eines Kammkäfigs als Lagerkäfig nicht auf diese Käfigart beschränkt ist, da es auch möglich ist, den Lagerkäfig als zweiteiligen Blechnietkäfig auszubilden.

Schließlich wird es als vorteilhafte Ausgestaltung des erfindungsgemäß ausgebildeten Schrägrollenlagers durch Anspruch 8 noch vorgeschlagen, dass es durch zwei axial beidseitig der Rollenwälzkörper in umlaufende Befestigungsnuten in der inneren Mantelfläche des äußeren Lagerrings eingesetzte Elastomerdichtscheiben mit Metallarmierung gegen Verschmutzungen von Außen sowie gegen den Austritt von ggf. in den Lagerinnenraum eingefüllten Schmierstoff abgedichtet ist. Diese bei anderen Wälzlagerarten an sich bekannte Ausbildung ist deshalb bemerkenswert, da bei den eingangs als nächstliegender Stand der Technik beschriebenen Schrägrollenlagern durch das Fehlen geeigneter Befestigungsflächen sowie geeigneter Dichtflächen für solche Elastomerdichtschei-ben keine solche Abdichtung möglich ist. Durch die ebene Ausbildung der äußeren Mantelfläche des inneren Lagerrings und der inneren Mantelfläche des äußeren Lagerrings sind bei dem erfindungsgemäß ausgebildeten Schrägrollenlager die notwendigen Befestigungs- und Dichtflächen jedoch vorhanden.

Die gestellte Aufgabe wird bei einem erfindungsgemäß ausgebildeten Schrägrollenlager darüber hinaus auch durch ein Montageverfahren nach Anspruch 9 oder 10 gelöst, welches sich dadurch auszeichnet, dass das Schrägrollenlager nach einem an sich als Montageverfahren für Rillenkugellager bekannten Exzentermontageverfahren montiert wird.

Bei einer ersten Variante dieses Exzentermontageverfahrens wird dabei gemäß dem Anspruch 9 in einem ersten Schritt der innere Lagerring mit seiner mit dem Bord ausgebildeten Stirnseite auf eine horizontale Montageebene mit einer konvexen sichelförmigen Hilfsrampe derart aufgelegt, dass dieser mit seinem Bord an der Innendurchmesserseite der Hilfsrampe anliegt. Danach wird in einem zweiten Schritt der äußere Lagerring mit seiner mit dem Bord ausgebildeten Stirnseite nach oben derart exzentrisch zum inneren Lagerring angeordnet, dass einerseits die Hilfsrampe zwischen den Lagerringen angeordnet ist und andererseits um 180° zur Mitte der Hilfsrampe versetzt die Lagerringe aneinander anliegen. Als dritter Schritt wird dann der entstandene sichelförmige Freiraum zwischen dem äußeren Lagerring und dem inneren Lagerring mit den als Kegelrollen ausgebildeten Rollenwälzkörpern derart befüllt, dass deren kleinere Stirnseiten auf der Schrägseite der Hilfsrampe aufliegen.

Eine zweite Variante des Exzentermontageverfahrens unterscheidet sich von der ersten Variante gemäß dem Anspruch 10 dadurch, dass in einem ersten Schritt der äußere Lagerring mit seiner mit dem Bord ausgebildeten Stirnseite auf eine horizontale Montageebene mit einer konvexen sichelförmigen Hilfsrampe derart aufgelegt wird, dass dieser mit seinem Bord an der Außendurchmesserseite der Hilfsrampe anliegt. Danach wird in einem zweiten Schritt der innere Lagerring mit seiner mit dem Bord ausgebildeten Stirnseite nach oben derart exzentrisch zum äußeren Lagerring angeordnet, dass einerseits die Hilfsrampe zwischen den Lagerringen angeordnet ist und andererseits um 180° zur Mitte der Hilfsrampe versetzt die Lagerringe aneinander anliegen.

Der dritte Schritt dieser Variante besteht dann wieder darin, dass der entstandene sichelförmige Freiraum zwischen dem inneren Lagerring und dem äußeren Lagerring mit den als Kegelrollen ausgebildeten Rollenwälzkörpern derart befüllt wird, dass dabei deren größere Stirnseiten auf der Schrägseite der Hilfsrampe aufliegen.

Unabhängig von den beiden Varianten des Exzentermontageverfahrens wird dann nach Anspruch 11 in einem vierten Schritt der äußere Lagerring in Höhe des Berührungspunktes mit dem inneren Lagerring sowie in Höhe eines dem Berührungspunkt um 180° versetzten Punktes an dessen Außenmantelfläche derart eingespannt, dass der äußere Lagerring innerhalb seiner Elastizitätsgrenze geringfügig ovalisiert wird. Anschließend werden nach Anspruch 12 in einem fünften Schritt der innere Lagerring in eine koaxiale Lage zum äußeren Lagerring verschoben und die Rollenwälzkörper in ihren Laufbahnen in den Lagerringen unter Aufhebung der Ovalisierung des äußeren Lagerrings gleichmäßig umfangsverteilt.

Bei Anwendung der ersten Variante des erfindungsgemäßen Exzentermontageverfahrens wird danach gemäß Anspruch 13 in einem sechsten Schritt der als Kammkäfig ausgebildete Lagerkäfig mit seinen Käfigstegen zwischen die Rollenwälzkörper von der Seite mit deren kleineren Stirnseiten her eingeführt und an der Innenfläche des Bordes am inneren Lagerring verrastet. Bei Anwendung der zweiten Variante des erfindungsgemäßen Exzentermontageverfahrens wird dagegen gemäß Anspruch 14 in einem sechsten Schritt der als Kammkäfig ausgebildete Lagerkäfig mit seinen Käfigstegen zwischen die Rollenwälzkörper von der Seite mit deren größeren Stirnseiten her eingeführt und an der Innenfläche des Bordes am äußeren Lagerrings verrastet.

Nach Anspruch 15 wird dann als Abschluss des erfindungsgemäßen Exzentermontageverfahrens in einem letzten Schritt noch der Lagerinnenraum mit Schmierstoff befüllt und die beiden Elastomerdichtscheiben in die umlaufenden Befestigungsnuten in der inneren Mantelfläche des äußeren Lagerrings eingesetzt.

Schließlich wird die gestellte Aufgabe bei einem erfindungsgemäß ausgebildeten Schrägrollenlager auch noch durch zwei Varianten einer Vorrichtung zur Durchführung des beschriebenen Montageverfahrens gelöst.

Zur Durchführung der ersten Variante des erfindungsgemäßen Exzentermontageverfahrens wird es dabei gemäß Anspruch 16 vorgeschlagen, dass die mit ihrer Innendurchmesserseite am inneren Lagerring anliegende Hilfsrampe eine sich zum äußeren Lagerring hin mit dem Neigungswinkel der Laufbahn im inneren Lagerring verjüngende Schrägseite sowie eine maximale Rampenhöhe aufweist, die der Höhe des Bordes am inneren Lagerring entspricht. Zur Durchführung der zweiten Variante des erfindungsgemäßen Exzentermontageverfahrens wird es dagegen gemäß Anspruch 17 vorgeschlagen, dass die mit ihrer Außendurchmesserseite am äußeren Lagerring anliegende Hilfsrampe eine sich zum inneren Lagerring hin mit dem Neigungswinkel der Laufbahn im äußeren Lagerring verjüngende Schrägseite sowie eine maximale Rampenhöhe aufweist, die der Höhe des Bordes am äußeren Lagerring entspricht.

Zusammenfassend weist das erfindungsgemäß ausgebildete Schrägrollenlager somit gegenüber den aus dem Stand der Technik bekannten Schrägrollenlagern den Vorteil auf, dass es trotz des mit dem Exzentermontageverfahren maximal erreichbaren Wälzkörperfüllgrades von ca. 60 % eine höhere Tragfähigkeit als ein gleichartig montiertes einreihiges Rillenkugellager aufweist, da die verwendeten Rollenwälzkörper nicht mehr wie bei Lagerkugeln im Punktkontakt sondern im Linienkontakt zu ihren Laufbahnen stehen. Hinsichtlich der erreichbaren Tragfähigkeit reiht sich dabei ein erfindungsgemäß ausgebildetes Schrägrollenlager als komplett neuer Lagertyp [z. B. Baureihe ARU (Angular Roller Unit) 207 = 40 kN] etwa in der Mitte zwischen der Tragfähigkeit eines einreihigen Rillenkugellagers [z. B. Baureihe 6207 = 25,5 kN] und der Tragfähigkeit eines einreihigen Zylinderrollenlagers [z. B. Baureihe NUP 207E = 56 kN] ein. Darüber hinaus hält sich der Anteil der spanenden Bearbeitung bei der Herstellung und Bearbeitung der Laufbahnen und der Borde des erfindungsgemäßen Schrägrollenlagers durch die in die zylindrischen inneren und äußeren Mantelflächen beider Lagerringe einfach kegelförmig eingearbeiteten Laufbahnen in vertretbaren Kostengrenzen und es sind gleichzeitig durch die dabei entstehenden, einteilig mit den Lagerringen ausgebildeten Borde keine separaten Bordscheiben mehr notwendig. Im Zusammenhang mit dem Exzentermontageverfahren für die Rollenwälzkörper und mit dem verwendeten Kammkäfig zeichnet sich das erfindungsgemäße Schrägrollenlager somit insgesamt durch einen niedrigen Montageaufwand und damit durch geringe Gesamtkosten für die Lagerfertigung aus.

### Kurze Beschreibung der Zeichnungen

Eine bevorzugte Ausführungsform des erfindungsgemäß ausgebildeten Schrägrollenlagers sowie zwei alternative Varianten eines Verfahrens zu dessen Montage und zwei zugehörige Vorrichtungen zur Durchführung dieser Verfahrensvarianten werden nachfolgend unter Bezugnahme auf die beigefügten Zeichnungen näher erläutert. Dabei zeigen:
- Figur 1: eine vergrößerte Darstellung eines Querschnittes durch ein erfindungsgemäß ausgebildetes Schrägrollenlager;
- Figur 2a, 2b: eine Darstellung des ersten Schrittes der ersten Variante des erfindungsgemäßen Montageverfahrens in einer Draufsicht und einer Schnittansicht;
- Figur 3a, 3b: eine Darstellung des zweiten Schrittes der ersten Variante des erfindungsgemäßen Montageverfahrens in einer Draufsicht und einer Schnittansicht;
- Figur 4a, 4b: eine Darstellung des dritten Schrittes der ersten Variante des erfindungsgemäßen Montageverfahrens in einer Draufsicht und einer Schnittansicht;
- Figur 5a, 5b: eine Darstellung des ersten Schrittes der zweiten Variante des erfindungsgemäßen Montageverfahrens in einer Draufsicht und einer Schnittansicht;
- Figur 6a, 6b: eine Darstellung des zweiten Schrittes der zweiten Variante des erfindungsgemäßen Montageverfahrens in einer Draufsicht und einer Schnittansicht;
- Figur 7a, 7b: eine Darstellung des dritten Schrittes der zweiten Variante des erfindungsgemäßen Montageverfahrens in einer Draufsicht und einer Schnittansicht;
- Figur 8a, 8b: eine Darstellung des fünften Schrittes beider Varianten des erfindungsgemäßen Montageverfahrens in einer Draufsicht und einer Schnittansicht;
- Figur 9a, 9b: eine Darstellung des sechsten Schrittes beider Varianten des erfindungsgemäßen Montageverfahrens in einer Draufsicht und einer Schnittansicht;
- Figur 10a, 10b: eine Darstellung der Hilfsrampe zur Durchführung der ersten Variante des erfindungsgemäßen Montageverfahrens in einer Draufsicht und einer Schnittansicht;
- Figur 11a, 11b: eine Darstellung der Hilfsrampe zur Durchführung der zweiten Variante des erfindungsgemäßen Montageverfahrens in einer Draufsicht und einer Schnittansicht;

### Ausführliche Beschreibung der Zeichnungen

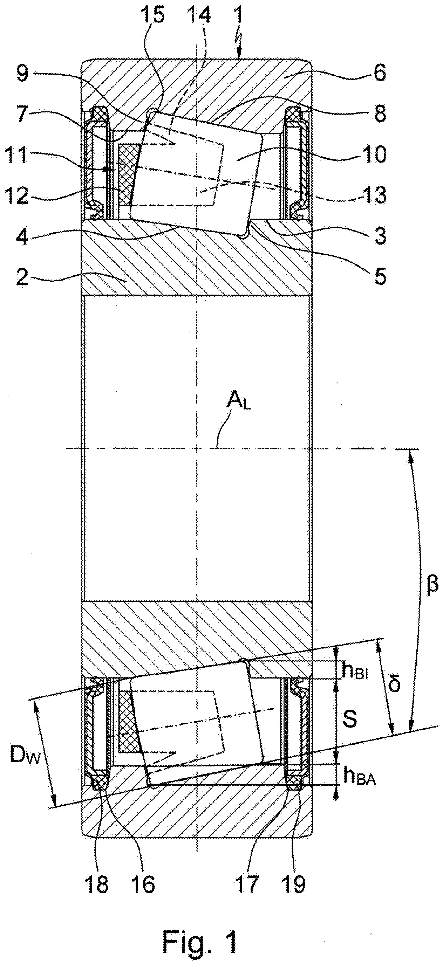

In Figur 1 ist ein Querschnitt eines einreihigen Schrägrollenlagers dargestellt, welches beispielsweise als Ersatz des bisher verwendeten Rillenkugellagers zur Lagerung der Kurbelwelle in Kraftfahrzeug-Verbrennungsmotoren geeignet ist. Deutlich sichtbar besteht dieses Schrägrollenlager 1 aus einem inneren Lagerring 2 mit einer an dessen äußerer Mantelfläche 3 geneigt zur Lagerrotationsachse A_{L} angeordneten inneren Laufbahn 4, die an ihrem kleinsten Durchmesser durch einen Bord 5 begrenzt wird, sowie aus einem äußeren Lagerring 6 mit einer an dessen innerer Mantelfläche 7 ebenfalls geneigt zur Lagerrotationsachse A_{L} angeordneten äußeren Laufbahn 8, die an ihrem größten Durchmesser durch einen Bord 9 begrenzt wird. Zwischen den Lagerringen 2, 6 ist darüber hinaus eine Vielzahl auf deren Laufbahnen 4, 8 abrollender Rollenwälzkörper 10 angeordnet, die in Umfangsrichtung durch einen Lagerkäfig 11 in gleichmäßigen Abständen zueinander gehalten werden.

Desweiteren ist in Figur 1 zu sehen, dass die äußere Mantelfläche 3 des inneren Lagerrings 2 und die innere Mantelfläche 7 des äußeren Lagerrings 6 im Bereich außerhalb der Laufbahnen 4,8 koaxial zur Lagerrotationsachse A_{L} verlaufend zylindrisch ausgebildet und die Laufbahnen 4, 8 beider Lagerringe 2, 6 jeweils kegelförmig in die zylindrischen Mantelflächen 3, 7 eingearbeitet sind. Die dabei entstehenden und die Laufbahnen 4, 8 jeweils einseitig begrenzenden Borde 5, 9 sind dadurch jeweils einteilig mit den Lagerringen 2, 6 ausgebildet.

Ebenso ist aus Figur 1 ersichtlich, dass die Rollenwälzkörper 10 als Kegelrollen ausgebildet sind, die einen Kegelwinkel δ von bevorzugt 2° aufweisen und in einem Hüllkreiswinkel β von bevorzugt 6° auf ihren Laufbahnen 4, 8 abrollen. Außerdem ist der Spalt S zwischen der äußeren Mantelfläche 3 des inneren Lagerrings 2 und der inneren Mantelfläche 7 des äußeren Lagerrings 6 so bemessen, dass das zweifache seines Maßes größer als der größte Durchmesser D_{W} der Rollenwälzkörper 10 ist, um das Einsetzen der Rollenwälzkörper 10 in das Radialwälzlager 1 nach dem nachfolgend näher beschriebenen Montageverfahren zu ermöglichen. Zusätzlich weist sowohl der die Laufbahn 4 im inneren Lagerring 2 begrenzende Bord 5 als auch der die Laufbahn 8 im äußeren Lagerring 6 begrenzende Bord 9 eine gleiche Mindesthöhe h_{BI} h_{BA} von ca. 20% des größten Durchmessers D_{W} der Rollenwälzkörper 10 auf, um im Lagerbetrieb auftretende hohe Axialkräfte in die eine Richtung mit möglichst geringer Bordreibung aufnehmen zu können.

Weiterhin ist in Figur 1 erkennbar, dass der Lagerkäfig 11 bevorzugt durch einen nach der Montage der Rollenwälzkörper 10 in das Radialwälzlager 1 einsetzbaren Kammkäfig gebildet wird. Der aus einem Käfigring 12 sowie aus einer Vielzahl von axialen Käfigstegen 13 bestehende Lagerkäfig 11 weist dabei an seinen verdeckt dargestellten Käfigstegen 13 mehrere ebenfalls verdeckt dargestellte, gleichmäßig umfangsverteilte und schräg zur Lagermittelachse A_{L} verlaufende Raststege 14 auf, durch die der Lagerkäfig 11 an der Innenfläche 15 des Bordes 9 am äußeren Lagerrings 6 axial lagefixierbar ist.

Schließlich ist in Figur 1 noch zu sehen, dass das Radialwälzlager 1 durch zwei axial beidseitig der Rollenwälzkörper 10 in umlaufende Befestigungsnuten 16, 17 in der inneren Mantelfläche 7 des äußeren Lagerrings 6 eingesetzte Elastomerdichtscheiben 18, 19 mit Metallarmierung gegen Verschmutzungen von Außen und gegen den Austritt von ggf. in den Lagerinnenraum 20 eingefüllten Schmierstoff abgedichtet ist. Diese bei anderen Wälzlagerarten an sich bekannte Ausbildung ist bei dem erfindungsgemäßen Radialwälzlager 1 im Gegensatz zu bekannten Schrägrollenlagern nur möglich, da dieses durch die radial ebene Ausbildung der äußeren Mantelfläche 3 des inneren Lagerrings 2 und der inneren Mantelfläche 7 des äußeren Lagerrings 6 geeignete Befestigungsflächen sowie geeignete Dichtflächen für solche Elastomerdichtscheiben 18, 19 aufweist.

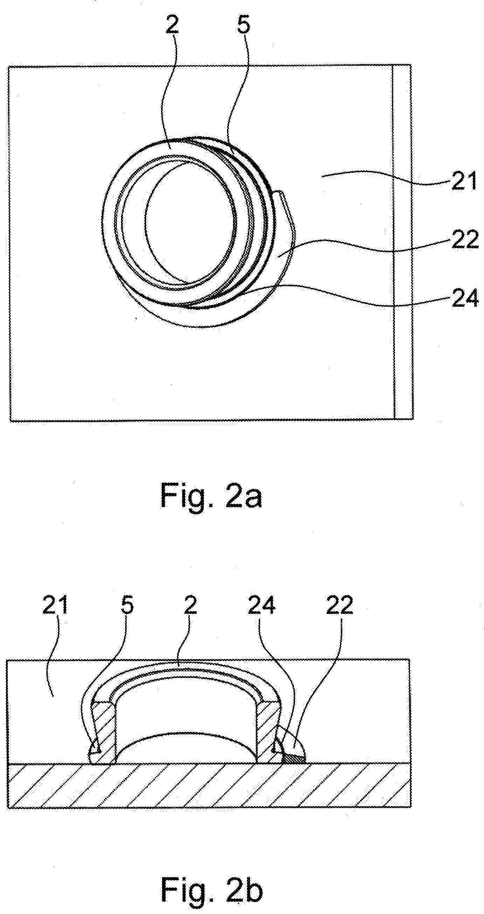

In den Figuren 2a, 2b, 3a, 3b und 4a, 4b sind desweiteren die ersten Schritte einer ersten Variante eines Montageverfahrens für das erfindungsgemäße Schrägrollenlager 1 schematisch dargestellt. Dieses Montageverfahren ist im Wesentlichen ein an sich als Montageverfahren für Rillenkugellager bekanntes, modifiziertes Exzentermontageverfahren, bei dem, wie in den Figuren 2a und 2b zu sehen ist, in einem ersten Schritt der innere Lagerring 2 mit seiner mit dem Bord 5 ausgebildeten Stirnseite auf eine horizontale Montageebene 21 mit einer konvexen sichelförmigen Hilfsrampe 22 derart aufgelegt wird, dass dieser mit seinem Bord 5 an der Innendurchmesserseite 24 der Hilfsrampe 22 anliegt.

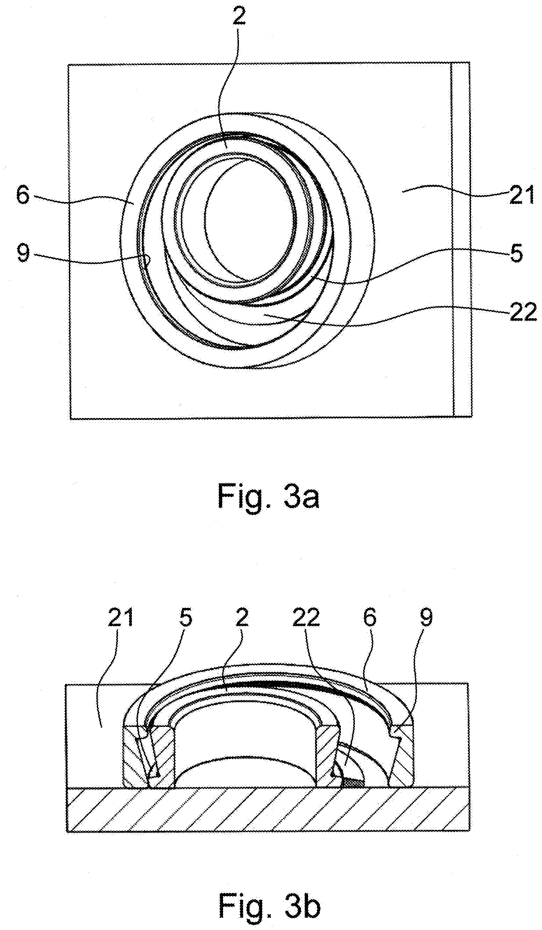

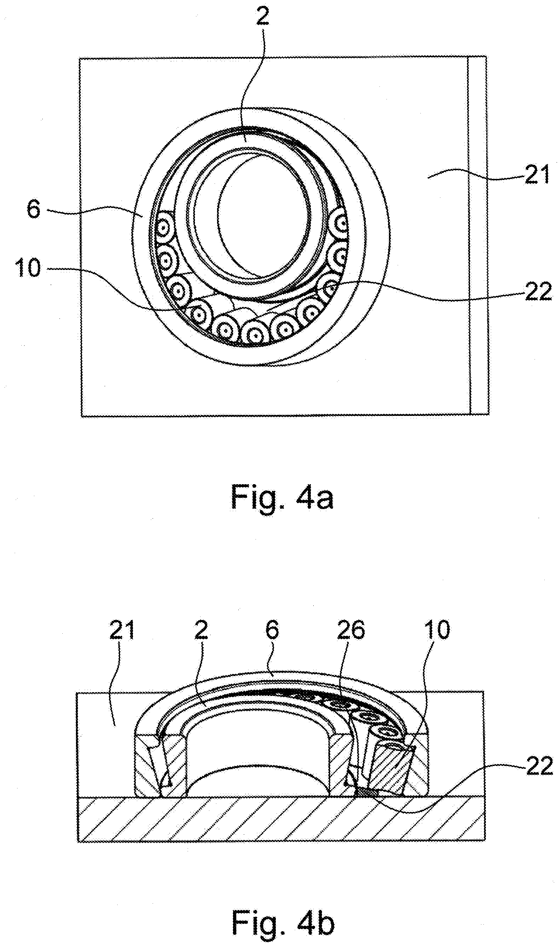

Danach wird in einem zweiten Schritt der äußere Lagerring 6 mit seiner mit dem Bord 9 ausgebildeten Stirnseite nach oben derart exzentrisch zum inneren Lagerring 2 angeordnet, dass, wie in den Figuren 3a und 3b deutlich sichtbar, einerseits die Hilfsrampe 22 zwischen den Lagerringen 2, 6 angeordnet ist und andererseits um 180° zur Mitte der Hilfsrampe 22 versetzt die Lagerringe 2, 6 aneinander anliegen.
In einem dritten, in den Figuren 4a und 4b dargestellten Schritt wird dann der entstandene sichelförmige Freiraum zwischen dem äußeren Lagerring 6 und dem inneren Lagerring 2 mit den als Kegelrollen ausgebildeten Rollenwälzkörpern 10 derart befüllt, dass deren kleinere Stirnseiten auf der Schrägseite 26 der Hilfsrampe 22 aufliegen.

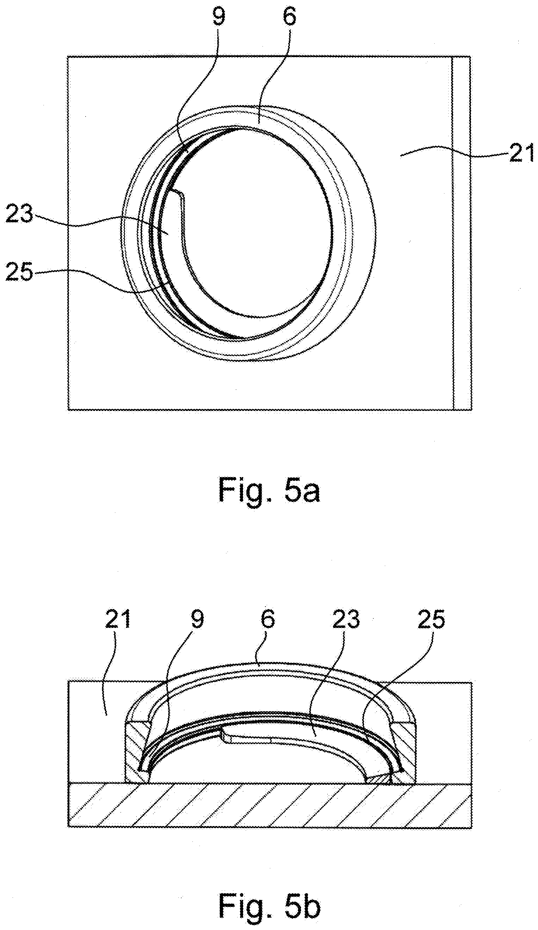

Die in den Figuren 5a, 5b, 6a, 6b und 7a, 7b dargestellte zweite Variante des Montageverfahrens für das erfindungsgemäße Schrägrollenlager ist ebenfalls ein modifiziertes Exzentermontageverfahren und unterscheidet sich von der ersten Variante dadurch, dass bei dem in den Figuren 5a und 5b abgebildeten ersten Schritt diesmal der äußere Lagerring 6 mit seiner mit dem Bord 9 ausgebildeten Stirnseite auf eine horizontale Montageebene 21 mit einer konvexen sichelförmigen Hilfsrampe 23 derart aufgelegt wird, dass dieser mit seinem Bord 9 an der Außendurchmesserseite 25 der Hilfsrampe 23 anliegt.

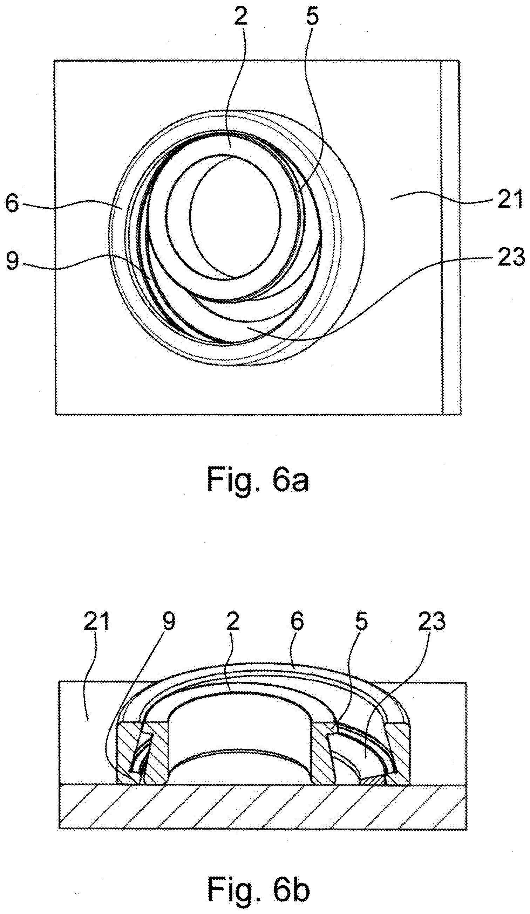

Ähnlich wie bei der ersten Variante wird danach in einem zweiten Schritt der innere Lagerring 2 mit seiner mit dem Bord 5 ausgebildeten Stirnseite nach oben derart exzentrisch zum äußeren Lagerring 6 angeordnet, dass, wie in den Figuren 6a und 6b erkennbar ist, einerseits die Hilfsrampe 23 zwischen den Lagerringen 2, 6 angeordnet ist und andererseits um 180° zur Mitte der Hilfsrampe 23 versetzt die Lagerringe 2, 6 aneinander anliegen.

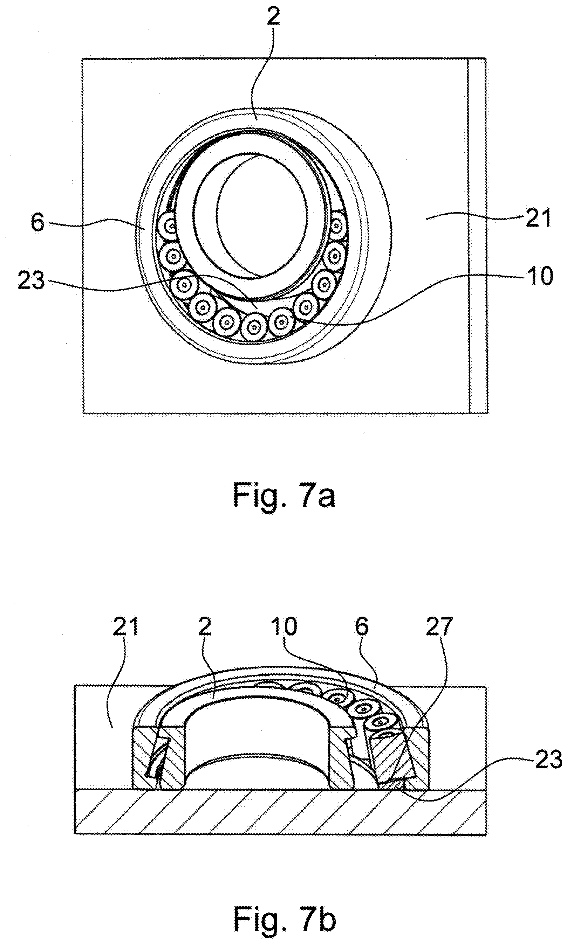

In einem dritten, in den Figuren 7a und 7b dargestellten Schritt wird dann auch hier der entstandene sichelförmige Freiraum zwischen dem inneren Lagerring 2 und dem äußeren Lagerring 6 mit den als Kegelrollen ausgebildeten Rollenwälzkörpern 10 befüllt, jedoch mit dem Unterschied, dass hierbei die größeren Stirnseiten der Rollenwälzkörper 10 auf der Schrägseite 27 der Hilfsrampe 23 aufliegen.

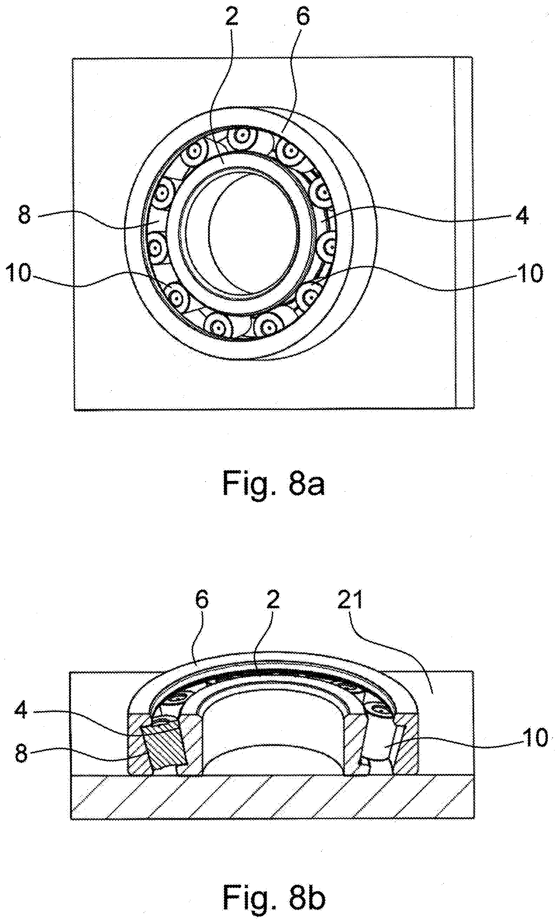

Unabhängig von den beiden Varianten des Exzentermontageverfahrens wird dann in einem vierten, in den Zeichnungen nicht näher dargestelltem Schritt der äußere Lagerring 3 in Höhe des Berührungspunktes mit dem inneren Lagerring 2 sowie in Höhe eines dem Berührungspunkt um 180° versetzten Punktes an dessen Außenmantelfläche derart eingespannt wird, dass der äußere Lagerring 3 innerhalb seiner Elastizitätsgrenze geringfügig ovalisiert wird. Anschließend wird, wie aus den Figuren 8a und 8b ersichtlich ist, in einem fünften Schritt der innere Lagerring 2 in eine koaxiale Lage zum äußeren Lagerring 3 verschoben, um die Rollenwälzkörper 10 in den Lagerringen 2, 6 unter Aufhebung der Ovalisierung des äußeren Lagerrings 3 gleichmäßig umfangsverteilt in ihren Laufbahnen 4, 8 anzuordnen.

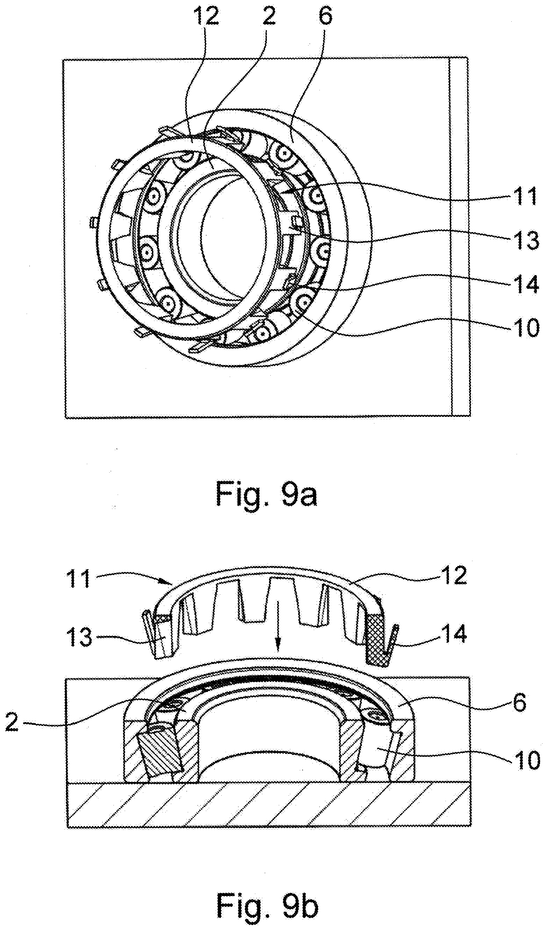

Bei Anwendung der ersten Variante des erfindungsgemäßen Exzentermontageverfahrens wird danach in einem sechsten, aus Gründen der Vereinfachung in den Zeichnungen jedoch nicht dargestellten Schritt der als Kammkäfig ausgebildete Lagerkäfig 11 mit seinen Käfigstegen 13 zwischen die Rollenwälzkörper 10 von der Seite mit deren kleineren Stirnseiten her eingeführt und mit seinen Rastnasen an der Innenfläche des Bordes 5 am inneren Lagerring 2 verrastet. Bei Anwendung der zweiten Variante des erfindungsgemäßen Exzentermontageverfahrens wird dagegen in einem sechsten Schritt der als Kammkäfig ausgebildete Lagerkäfig 11, wie in den Figuren 9a und 9b abgebildet, mit seinen Käfigstegen 13 zwischen die Rollenwälzkörper 10 von der Seite mit deren größeren Stirnseiten her eingeführt und, wie in Figur 1 gezeigt, mit seinen Raststegen 14 an der Innenfläche 15 des Bordes 9 am äußeren Lagerrings 6 verrastet. Abschließend wird dann noch der Lagerinnenraum 20 mit Schmierstoff befüllt und die beiden Elastomerdichtscheiben 18, 19 in die umlaufenden Befestigungsnuten 16, 17 in der inneren Mantelfläche 7 des äußeren Lagerrings 6 in der ebenfalls in Figur 1 dargestellten Art eingesetzt.

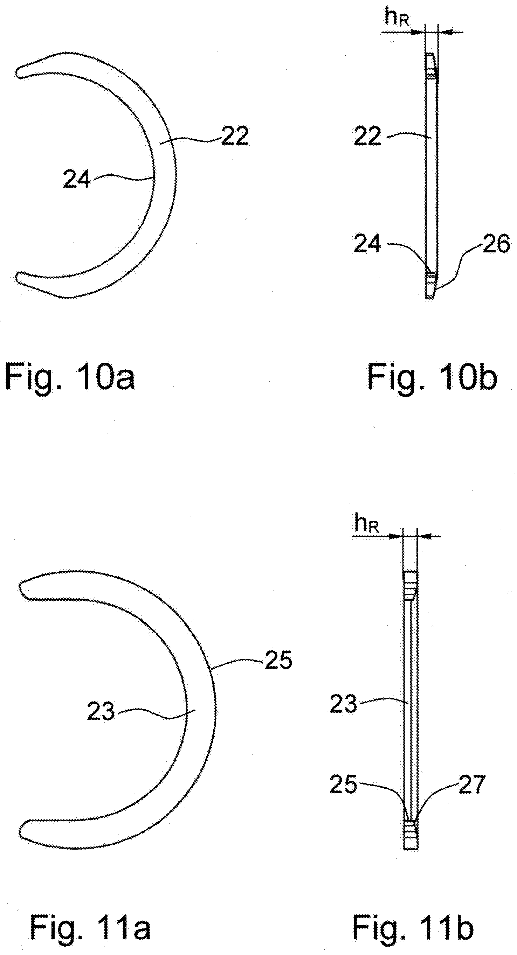

In den Figuren 10a, 10b und 11a, 11b sind schließlich noch die Hilfsrampen 22 und 23 zur Durchführung beider Varianten des erfindungsgemäßen Exzentermontageverfahrens dargestellt. Die für die erste Verfahrensvariante verwendete Hilfsrampe 22 zeichnet sich dabei dadurch aus, dass diese mit ihrer Innendurchmesserseite 24 am inneren Lagerring 6 anliegt und, wie in den Figuren 10a und 10b deutlich sichtbar ist, eine sich zum äußeren Lagerring 3 hin mit dem Neigungswinkel der Laufbahn 4 im inneren Lagerring 2 verjüngende Schrägseite 26 sowie eine maximale Rampenhöhe h_{R} aufweist, die der Bordhöhe h_{BI} am inneren Lagerring 2 entspricht.

Die für die zweite Verfahrensvariante verwendete Hilfsrampe 23 zeichnet sich dagegen dadurch aus, dass diese mit ihrer Außendurchmesserseite 25 am äußeren Lagerring 6 anliegt und, wie in den Figuren 11a und 11b zu sehen ist, eine sich zum inneren Lagerring 2 hin mit dem Neigungswinkel der Laufbahn 8 im äußeren Lagerring 6 verjüngende Schrägseite 27 sowie eine maximale Rampenhöhe h_{R} aufweist, die der Bordhöhe h_{BA} am äußeren Lagerring 6 entspricht.

**Bezugszahlenliste**

| | | | |
|---|---|---|---|
| 1 | Radialwälzlager | A_{L} | Lagerrotationsachse |
| 2 | innerer Lagerring | δ | Kegelwinkel |
| 3 | äußere Mantelfläche von 2 | β | Hüllkreiswinkel |
| 4 | innere Laufbahn in 2 | S | Spalt zwischen 3 und 7 |
| 5 | Bord an 4 | D_{W} | größter Durchmesser von 10 |
| 6 | äußerer Lagerring | h_{BI} | Bordhöhe an 2 |
| 7 | innere Mantelfläche von 6 | h_{BA} | Bordhöhe an 6 |
| 8 | äußere Laufbahn in 6 | h_{R} | Rampenhöhe |
| 9 | Bord an 8 | | |
| 10 | Rollenwälzkörper | | |
| 11 | Lagerkäfig | | |
| 12 | Käfigring von 11 | | |
| 13 | Käfigstege an 12 | | |
| 14 | Raststege an 13 | | |
| 15 | Innenfläche von 9 | | |
| 16 | Befestigungsnut in 7 | | |
| 17 | Befestigungsnut in 7 | | |
| 18 | Elastomerdichtscheibe | | |
| 19 | Elastomerdichtscheibe | | |
| 20 | Lagerinnenraum | | |
| 21 | Montageebene | | |
| 22 | Hilfsrampe | | |
| 23 | Hilfsrampe | | |
| 24 | Innendurchmesserseite von 22 | | |
| 25 | Außendurchmesserseite von 23 | | |
| 26 | Schrägseite an 22 | | |
| 27 | Schrägseite an 23 | | |

## Patentansprüche

1. Schrägrollenlager (1), umfassend einen inneren Lagerring (2) mit einer an dessen äußerer Mantelfläche (3) geneigt zur Lagerrotationsachse (A_{L}) angeordneten inneren Laufbahn (4) und einen diese Laufbahn (4) an ihrem kleinsten Durchmesser begrenzenden Bord (5), einen äußeren Lagerring (6) mit einer an dessen innerer Mantelfläche (7) geneigt zur Lagerrotationsachse (A_{L}) angeordneten äußeren Laufbahn (8) und einen diese Laufbahn (8) an ihrem größten Durchmesser begrenzenden Bord (9) sowie eine Vielzahl zwischen den Lagerringen (2, 6) angeordneter und auf deren Laufbahnen (4, 8) abrollender Rollenwälzkörper (10), die in Umfangsrichtung durch einen Lagerkäfig (11) in gleichmäßigen Abständen zueinander gehalten werden, **dadurch gekennzeichnet, dass** die äußere Mantelfläche (3) des inneren Lagerrings (2) und die innere Mantelfläche (7) des äußeren Lagerrings (6) jeweils beidseitig außerhalb der Laufbahnen (4,8) zumindest abschnittsweise koaxial zur Lagerrotationsachse (A_{L}) verlaufend zylindrisch ausgebildet sind und die Laufbahnen (4, 8) beider Lagerringe (2, 6) jeweils kegelförmig in die Mantelflächen (3, 7) eingearbeitet sind und dass die dabei entstehenden und die Laufbahnen (4, 8) jeweils einseitig begrenzenden Borde (5, 9) dadurch jeweils einteilig mit den Lagerringen (2, 6) ausgebildet sind.

2. Schrägrollenlager nach Anspruch 1, **dadurch gekennzeichnet, dass** die Rollenwälzkörper (10) bevorzugt als Kegelrollen ausgebildet sind, die einen Kegelwinkel (δ) im Bereich von 1° bis 4°, bevorzugt von 2°, aufweisen und in einem Hüllkreiswinkel (β) zwischen 3° bis 7°, bevorzugt von 6°, auf ihren Laufbahnen (4, 8) abrollen.

3. Schrägrollenlager nach Anspruch 2, **dadurch gekennzeichnet, dass** der Spalt (S) zwischen der äußeren Mantelfläche (3) des inneren Lagerrings (2) und der inneren Mantelfläche (7) des äußeren Lagerrings (6) so bemessen ist, dass das Zweifache seines Maßes größer als der größte Durchmesser (Dw) der Rollenwälzkörper (10) ist.

4. Schrägrollenlager nach Anspruch 2, **dadurch gekennzeichnet, dass** sowohl der die Laufbahn (4) im inneren Lagerring (2) begrenzende Bord (5) als auch der die Laufbahn (8) im äußeren Lagerring (6) begrenzende Bord (9) eine gleiche Mindesthöhe (h_{BI}, h_{BA}) von 18% bis 22%, bevorzugt ca. 20%, des größten Durchmessers (D_{W}) der Rollenwälzkörper (10) aufweisen.

5. Schrägrollenlager nach Anspruch 1, **dadurch gekennzeichnet, dass** der Lagerkäfig (11) durch einen nach der Montage der Rollenwälzkörper (10) in das Radialwälzlager (1) einsetzbaren und aus einem Käfigring (12) sowie aus einer Vielzahl von axialen Käfigstegen (13) bestehenden Kammkäfig, gebildet wird.

6. Schrägrollenlager nach Anspruch 4, **dadurch gekennzeichnet, dass** der Lagerkäfig (11) an seinen Käfigstegen (13) mehrere gleichmäßig umfangsverteilte und geneigt zur Lagerrotationsachse (A_{L}) verlaufende Raststege (14) aufweist, durch die der Lagerkäfig (11) an der Innenfläche (15) des Bordes (9) am äußeren Lagerrings (6) axial lagefixierbar ist.

7. Schrägrollenlager nach Anspruch 4, **dadurch gekennzeichnet, dass** der Lagerkäfig (11) an seinen Käfigstegen (13) mehrere gleichmäßig umfangsverteilte und einen kleineren Innendurchmesser als der Käfigring (12) aufweisende Rastnasen aufweist, durch die der Lagerkäfig (11) an der Innenfläche des Bordes (5) am inneren Lagerring (2) axial lagefixierbar ist.

8. Schrägrollenlager nach Anspruch 1, **dadurch gekennzeichnet, dass** es durch zwei axial beidseitig der Rollenwälzkörper (10) in' umlaufende Befestigungsnuten (16, 17) in der inneren Mantelfläche (7) des äußeren Lagerrings (6) eingesetzte Elastomerdichtscheiben (18, 19) mit Metallarmierung gegen Verschmutzungen von außen sowie gegen den Austritt von ggf. in . den Lagerinnenraum (20) eingefüllten Schmierstoff abgedichtet ist.

9. Verfahren zur Montage eines Schrägrollenlagers nach einem der Ansprüche 1 bis 8, bei dem das Schrägrollenlager (1) nach einem an sich als Montageverfahren für Rillenkugellager bekannten Exzentermontagerverfahren montiert wird, **dadurch gekennzeichnet, dass**
• in einem ersten Schritt der innere Lagerring (2) mit seiner mit dem Bord (5) ausgebildeten Stirnseite auf eine horizontale Montageebene (21) mit einer konvexen sichelförmigen Hilfsrampe (22) derart aufgelegt wird, dass dieser mit seinem Bord (5) an der Innendurchmesserseite (24) der Hilfsrampe (22) anliegt.
• in einem zweiten Schritt der äußere Lagerring (6) mit seiner mit dem Bord (9) ausgebildeten Stirnseite nach oben derart exzentrisch zum inneren Lagerring (2) angeordnet wird, dass einerseits die Hilfsrampe (22) zwischen den Lagerringen (2, 6) angeordnet ist und andererseits um 180° zur Mitte der Hilfsrampe (22) versetzt die Lagerringe (2, 6) aneinander anliegen.
• in einem dritten Schritt der entstandene sichelförmige Freiraum zwischen dem äußeren Lagerring (6) und dem inneren Lagerring (2) mit den als Kegelrollen ausgebildeten Rollenwälzkörpern (10) derart befüllt wird, dass deren kleinere Stirnseiten auf der Schrägseite (26) der Hilfsrampe (22) aufliegen.

10. Verfahren zur Montage eines Schrägrollenlagers nach einem der Ansprüche 1 bis 8, bei dem das Schrägrollenlager (1) nach einem an sich als Montageverfahren für Rillenkugellager bekannten Exzentermontagerverfahren montiert wird, **dadurch gekennzeichnet, dass**
• in einem ersten Schritt der äußere Lagerring (6) mit seiner mit dem Bord (9) ausgebildeten Stirnseite auf eine horizontale Montageebene (21) mit einer konvexen sichelförmigen Hilfsrampe (23) derart aufgelegt wird, dass dieser mit seinem Bord (9) an der Außendurchmesserseite (25) der Hilfsrampe (23) anliegt.
• in einem zweiten Schritt der innere Lagerring (2) mit seiner mit dem Bord (5) ausgebildeten Stirnseite nach oben derart exzentrisch zum äußeren Lagerring (6) angeordnet wird, dass einerseits die Hilfsrampe (23) zwischen den Lagerringen (2, 6) angeordnet ist und andererseits um 180° zur Mitte der Hilfsrampe (23) versetzt die Lagerringe (2, 6) aneinander anliegen.
• in einem dritten Schritt der entstandene sichelförmige Freiraum zwischen dem inneren Lagerring (2) und dem äußeren Lagerring (6) mit den als Kegelrollen ausgebildeten Rollenwälzkörpern (10) derart befüllt wird, dass deren größere Stirnseiten auf der Schrägseite (27) der Hilfsrampe (23) aufliegen.

11. Verfahren nach Anspruch 9 oder 10, **dadurch gekennzeichnet, dass** in einem vierten Schritt der äußere Lagerring (3) in Höhe des Berührungspunktes mit dem inneren Lagerring (2) sowie in Höhe eines dem Berührungspunkt um 180° versetzten Punktes an dessen Außenmantelfläche derart eingespannt wird, dass der äußere Lagerring (3) innerhalb seiner Elastizitätsgrenze geringfügig ovalisiert wird.

12. Verfahren nach Anspruch 11, **dadurch gekennzeichnet, dass** in einem fünften Schritt der innere Lagerring (2) in eine koaxiale Lage zum äußeren Lagerring (3) verschoben wird und die Rollenwälzkörper (10) in ihren Laufbahnen (4, 8) in den Lagerringen (2, 6) unter Aufhebung der Ovalisierung des äußeren Lagerrings (3) gleichmäßig umfangsverteilt werden.

13. Verfahren nach Anspruch 12, **dadurch gekennzeichnet, dass** in einem sechsten Schritt der als Kammkäfig ausgebildete Lagerkäfig (11) mit seinen Käfigstegen (13) zwischen die Rollenwälzkörper (10) von der Seite mit deren kleineren Stirnseiten her eingeführt und mit seinen Rastnasen an der Innenfläche des Bordes (5) am inneren Lagerring (2) verrastet wird.

14. Verfahren nach Anspruch 12, **dadurch gekennzeichnet, dass** in einem sechsten Schritt der als Kammkäfig ausgebildete Lagerkäfig (11) mit seinen Käfigstegen (13) zwischen die Rollenwälzkörper (10) von der Seite mit deren größeren Stirnseiten her eingeführt und mit seinen Raststegen (14) an der Innenfläche (15) des Bordes (9) am äußeren Lagerrings (6) verrastet wird.

15. Verfahren nach Anspruch 13 oder 14, **dadurch gekennzeichnet, dass** in einem abschließenden Schritt der Lagerinnenraum (20) mit Schmierstoff befüllt wird und die beiden Elastomerdichtscheiben (18, 19) in die umlaufenden Befestigungsnuten (16, 17) in den zylindrischen Abschnitten (7.1, 7.2) der inneren Mantelfläche (7) des äußeren Lagerrings (6) eingesetzt werden.

16. Vorrichtung zur Durchführung des Verfahrens nach Anspruch 9, **dadurch gekennzeichnet, dass** die mit ihrer Innendurchmesserseite (24) am inneren Lagerring (2) anliegende Hilfsrampe (22) eine sich zum äußeren Lagerring (3) hin mit dem Neigungswinkel der Laufbahn (4) im inneren Lagerring (2) verjüngende Schrägseite (26) sowie eine maximale Rampenhöhe (h_{R}) aufweist, die der Bordhöhe (h_{BI}) am inneren Lagerring (2) entspricht.

17. Vorrichtung zur Durchführung des Verfahren nach Anspruch 10, **dadurch gekennzeichnet, dass** die mit ihrer Außendurchmesserseite (25) am äußeren Lagerring (6) anliegende Hilfsrampe (23) eine sich zum inneren Lagerring (2) hin mit dem Neigungswinkel der Laufbahn (8) im äußeren Lagerring (6) verjüngende Schrägseite (27) sowie eine maximale Rampenhöhe (h_{R}) aufweist, die der Bordhöhe (h_{BA}) am äußeren Lagerring (6) entspricht.

## Claims

1. Angular contact roller bearing (1) comprising an inner bearing ring (2) with an inner raceway (4), which is arranged on the outer shell surface (3) of said inner bearing ring so as to be inclined with respect to the bearing axis of rotation (A_{L}), and comprising a rim (5) which delimits said raceway (4) at its smallest diameter, comprising an outer bearing ring (6) with an outer raceway (8), which is arranged on the inner shell surface (7) of said outer bearing ring so as to be inclined with respect to the bearing axis of rotation (A_{L}), and comprising a rim (9) which delimits said raceway (8) at its greatest diameter, and comprising a multiplicity of roller-type rolling bodies (10) which are arranged between the bearing rings (2, 6) and which roll on the raceways (4, 8) of said bearing rings and which are held with uniform spacings to one another in a circumferential direction by means of a bearing cage (11), **characterized in that** the outer shell surface (3) of the inner bearing ring (2) and the inner shell surface (7) of the outer bearing ring (6) are, in each case on both sides outside the raceways (4, 8), of cylindrical form so as to run coaxially with respect to the bearing axis of rotation (A_{L}) at least in sections, and the raceways (4, 8) of the two bearing rings (2, 6) are each formed in conical fashion into the shell surfaces (3, 7), and **in that** the rims (5, 9) which are thus formed and which delimit the raceways (4, 8) in each case on one side are thus each formed integrally with the bearing rings (2, 6).

2. Angular contact roller bearing according to Claim 1, **characterized in that** the roller-type rolling bodies (10) are preferably formed as tapered rollers which have a taper angle (δ) in the range from 1° to 4°, preferably of 2°, and which roll with an envelope circle angle (β) of between 3° and 7°, preferably of 6°, on their raceways (4, 8).

3. Angular contact roller bearing according to Claim 2, **characterized in that** the gap (S) between the outer shell surface (3) of the inner bearing ring (2) and the inner shell surface (7) of the outer bearing ring (6) is dimensioned such that two times the dimension of said gap is greater than the greatest diameter (Dw) of the roller-type rolling bodies (10) .

4. Angular contact roller bearing according to Claim 2, **characterized in that** both the rim (5) which delimits the raceway (4) in the inner bearing ring (2) and the rim (9) which delimits the raceway (8) in the outer bearing ring (6) have an equal minimum height (h_{BI}, h_{BA}) of 18% to 22%, preferably of approximately 20%, of the greatest diameter (Dw) of the roller-type rolling bodies (10).

5. Angular contact roller bearing according to Claim 1, **characterized in that** the bearing cage (11) is formed by a comb-type cage which is insertable into the radial rolling bearing (1) after the installation of the roller-type rolling bodies (10) and which is composed of a cage ring (12) and of a multiplicity of axial cage webs (13).

6. Angular contact roller bearing according to Claim 4, **characterized in that** the bearing cage (11) has, on its cage webs (13), multiple uniformly circumferentially distributed detent webs (14) which run so as to be inclined with respect to the bearing axis of rotation (A_{L}) and by means of which the bearing cage (11) is axially fixable in position on the inner surface (15) of the rim (9) on the outer bearing ring (6).

7. Angular contact roller bearing according to Claim 4, **characterized in that** the bearing cage (11) has, on its cage webs (13), multiple uniformly circumferentially distributed detent lugs which have a smaller inner diameter than the cage ring (12) and by means of which the bearing cage (11) is axially fixable in position on the inner surface of the rim (5) on the inner bearing ring (2).

8. Angular contact roller bearing according to Claim 1, **characterized in that** said angular contact roller bearing is sealed off against contamination from the outside, and against the escape of lubricant that has possibly been introduced into the bearing interior space (20), by means of two elastomer sealing disks (18, 19) which are inserted, axially on both sides of the roller-type rolling bodies (10), into encircling fastening grooves (16, 17) in the inner shell surface (7) of the outer bearing ring (6) and which have metal reinforcement.

9. Method for assembling an angular contact roller bearing according to one of Claims 1 to 8, in which the angular contact roller bearing (1) is assembled in accordance with an eccentric assembly method known per se as an assembly method for deep-groove ball bearings, **characterized in that**,
• in a first step, the inner bearing ring (2) is placed, with its face side formed with the rim (5), onto a horizontal assembly plane (21) with a convex sickle-shaped auxiliary ramp (22) in such a way that said inner bearing ring bears with its rim (5) against the inner diameter side (24) of the auxiliary ramp (22),
• in a second step, the outer bearing ring (6) is arranged, with its face side formed with the rim (9) upward, eccentrically with respect to the inner bearing ring (2) such that, at one side, the auxiliary ramp (22) is arranged between the bearing rings (2, 6) and, at the other side, offset 180° with respect to the center of the auxiliary ramp (22), the bearing rings (2, 6) bear against one another,
• in a third step, the sickle-shaped free space formed between the outer bearing ring (6) and the inner bearing ring (2) is filled with the roller-type rolling bodies (10) in the form of tapered rollers such that the relatively small face sides of said roller-type rolling bodies lie on the oblique side (26) of the auxiliary ramp (22).

10. Method for assembling an angular contact roller bearing according to one of Claims 1 to 8, in which the angular contact roller bearing (1) is assembled in accordance with an eccentric assembly method known per se as an assembly method for deep-groove ball bearings, **characterized in that**,
• in a first step, the outer bearing ring (6) is placed, with its face side formed with the rim (9), onto a horizontal assembly plane (21) with a convex sickle-shaped auxiliary ramp (23) in such a way that said outer bearing ring bears with its rim (9) against the outer diameter side (25) of the auxiliary ramp (23),
• in a second step, the inner bearing ring (2) is arranged, with its face side formed with the rim (5) upward, eccentrically with respect to the outer bearing ring (6) such that, at one side, the auxiliary ramp (23) is arranged between the bearing rings (2, 6) and, at the other side, offset 180° with respect to the center of the auxiliary ramp (23), the bearing rings (2, 6) bear against one another,
• in a third step, the sickle-shaped free space formed between the inner bearing ring (2) and the outer bearing ring (6) is filled with the roller-type rolling bodies (10) in the form of tapered rollers such that the relatively large face sides of said roller-type rolling bodies lie on the oblique side (27) of the auxiliary ramp (23).

11. Method according to Claim 9 or 10, **characterized in that**, in a fourth step, the outer bearing ring (3) is clamped, at the level of the contact point with the inner bearing ring (2) and at the level of a point on the outer shell surface of said outer bearing ring which is offset 180° with respect to the contact point, such that the outer bearing ring (3) is slightly ovalized within its elasticity limit.

12. Method according to Claim 11, **characterized in that**, in a fifth step, the inner bearing ring (2) is displaced into a coaxial position with respect to the outer bearing ring (3), and the roller-type rolling bodies (10) are uniformly circumferentially distributed in their raceways (4, 8) in the bearing rings (2, 6), with the ovalization of the outer bearing ring (3) being eliminated.

13. Method according to Claim 12, **characterized in that**, in a sixth step, the bearing cage (11) in the form of a comb-type cage is inserted with its cage webs (13) between the roller-type rolling bodies (10) from the side with the relatively small face sides of said roller-type rolling bodies, and said bearing cage is engaged with its detent lugs with detent action against the inner surface of the rim (5) on the inner bearing ring (2).

14. Method according to Claim 12, **characterized in that**, in a sixth step, the bearing cage (11) in the form of a comb-type cage is inserted with its cage webs (13) between the roller-type rolling bodies (10) from the side with the relatively large face sides of said roller-type rolling bodies, and said bearing cage is engaged with its detent webs (14) with detent action against the inner surface (15) of the rim (9) on the outer bearing ring (6).

15. Method according to Claim 13 or 14, **characterized in that**, in a final step, the bearing interior space (20) is filled with lubricant, and the two elastomer sealing disks (18, 19) are inserted into the encircling fastening grooves (16, 17) in the cylindrical sections (7.1, 7.2) of the inner shell surface (7) of the outer bearing ring (6).

16. Device for carrying out the method according to Claim 9, **characterized in that** the auxiliary ramp (22) which bears with its inner diameter side (24) against the inner bearing ring (2) has an oblique side (26), which tapers toward the outer bearing ring (3) with the angle of inclination of the raceway (4) in the inner bearing ring (2), and a maximum ramp height (h_{R}) which corresponds to the rim height (h_{BI}) on the inner bearing ring (2).

17. Device for carrying out the method according to Claim 10, **characterized in that** the auxiliary ramp (23) which bears with its outer diameter side (25) against the outer bearing ring (6) has an oblique side (27), which tapers toward the inner bearing ring (2) with the angle of inclination of the raceway (8) in the outer bearing ring (6), and a maximum ramp height (h_{R}) which corresponds to the rim height (h_{BA}) on the outer bearing ring (6).

## Revendications

1. Palier à rouleaux à contact oblique (1), comprenant une bague de palier interne (2) avec un chemin de roulement interne (4) disposé de manière inclinée par rapport à l'axe de rotation du palier (A_{L}) au niveau de sa surface d'enveloppe extérieure (3) et un bord (5) limitant ce chemin de roulement (4) au niveau de son diamètre le plus petit, une bague de palier externe (6) avec un chemin de roulement externe (8) disposé de manière inclinée par rapport à l'axe de rotation du palier (A_{L}) au niveau de sa surface d'enveloppe intérieure (7) et un bord (9) limitant ce chemin de roulement (8) au niveau de son plus grand diamètre, ainsi qu'une pluralité de corps de roulement à rouleaux (10) disposés entre les bagues de palier (2, 6) et roulant sur leur chemin de roulement (4, 8), qui sont maintenus à des distances régulières les uns des autres dans la direction périphérique par une cage de palier (11), **caractérisé en ce que** la surface d'enveloppe extérieure (3) de la bague de palier interne (2) et la surface d'enveloppe intérieure (7) de la bague de palier externe (6) sont à chaque fois réalisées sous forme cylindrique des deux côtés à l'extérieur des chemins de roulement (4, 8) en s'étendant au moins en partie coaxialement par rapport à l'axe de rotation du palier (A_{L}) et les chemins de roulement (4, 8) des deux bagues de palier (2, 6) sont respectivement réalisés sous forme conique dans les surfaces d'enveloppe (3, 7) et **en ce que** les bords (5, 9) ainsi formés et limitant les chemins de roulement (4, 8) à chaque fois d'un côté sont réalisés de ce fait à chaque fois d'une seule pièce avec les bagues de palier (2, 6).

2. Palier à rouleaux à contact oblique selon la revendication 1, **caractérisé en ce que** les corps de roulement à rouleaux (10) sont de préférence réalisés sous forme de rouleaux coniques qui présentent un angle de conicité (δ) dans une plage de 1° à 4°, de préférence de 2°, et qui roulent sur leurs chemins de roulement (4, 8) avec un angle de cercle d'enveloppe (β) compris entre 3° et 7°, de préférence de 6°.

3. Palier à rouleaux à contact oblique selon la revendication 2, **caractérisé en ce que** la fente (S) entre la surface d'enveloppe extérieure (3) de la bague de palier interne (2) et la surface d'enveloppe intérieure (7) de la bague de palier externe (6) est dimensionnée de telle sorte que le double de sa dimension soit supérieur au plus grand diamètre (D_{W}) des corps de roulement à rouleaux (10).

4. Palier à rouleaux à contact oblique selon la revendication 2, **caractérisé en ce qu'**à la fois le bord (5) limitant le chemin de roulement (4) dans la bague de palier interne (2) ainsi que le bord (9) limitant le chemin de roulement (8) dans la bague de palier externe (6) présentent une hauteur minimale identique (h_{BI}, h_{BA}) de 18 % à 22 %, de préférence d'environ 20 %, du plus grand diamètre (D_{W}) des corps de roulement à rouleaux (10).

5. Palier à rouleaux à contact oblique selon la revendication 1, **caractérisé en ce que** la cage de palier (11) est formée par une cage à doigts pouvant être insérée après le montage des corps de roulement à rouleaux (10) dans le palier à roulement radial (1) et constituée d'une bague de cage (12) ainsi que d'une pluralité de nervures de cage axiales (13).

6. Palier à rouleaux à contact oblique selon la revendication 4, **caractérisé en ce que** la cage de palier (11) présente, au niveau de ses nervures de cage (13), des nervures d'encliquetage (14) réparties uniformément sur la périphérie et s'étendant de manière inclinée par rapport à l'axe de rotation du palier (A_{L}), par le biais desquelles la cage de palier (11) peut être fixée axialement en position au niveau de la surface intérieure (15) du bord (9) sur la bague de palier externe (6) .

7. Palier à rouleaux à contact oblique selon la revendication 4, **caractérisé en ce que** la cage de palier (11) présente, au niveau de ses nervures de cage (13), plusieurs ergots d'encliquetage répartis uniformément sur la périphérie et présentant un plus petit diamètre intérieur que la bague de cage (12), par le biais desquels la cage de palier (11) peut être fixée axialement en position au niveau de la surface intérieure du bord (5) au niveau de la bague de palier interne (2) .

8. Palier à rouleaux à contact oblique selon la revendication 1, **caractérisé en ce qu'**il est étanchéifié contre les salissures provenant de l'extérieur ainsi que pour empêcher la sortie de lubrifiant éventuellement introduit dans l'espace interne du palier (20), par deux rondelles d'étanchéité en élastomère (18, 19) comprenant une armature métallique, insérées axialement des deux côtés des corps de roulement à rouleaux (10) dans des rainures de fixation périphériques (16, 17) dans la surface d'enveloppe intérieure (7) de la bague de palier externe (6).

9. Procédé de montage d'un palier à rouleaux à contact oblique selon l'une quelconque des revendications 1 à 8, dans lequel le palier à rouleaux à contact oblique (1) est monté selon un procédé de montage excentrique connu en soi en tant que procédé de montage pour des roulements rainurés à billes, **caractérisé en ce que**
- dans une première étape, la bague de palier interne (2) est placée avec son côté frontal réalisé avec le bord (5) sur un plan de montage horizontal (21) avec une rampe d'appui (22) convexe en forme de croissant, de telle sorte qu'elle s'applique avec son bord (5) contre le côté de diamètre intérieur (24) de la rampe d'appui (22),
- dans une deuxième étape, la bague de palier externe (6) est placée avec son côté frontal réalisé avec le bord (9) vers le haut de manière excentrée par rapport à la bague de palier interne (2) de telle sorte que d'une part la rampe d'appui (22) soit disposée entre les bagues de palier (2, 6) et que d'autre part les bagues de palier (2, 6) s'appliquent l'une contre l'autre de manière décalée de 180° par rapport au milieu de la rampe d'appui (22),
- dans une troisième étape, l'espace libre en forme de croissant obtenu entre la bague de palier externe (6) et la bague de palier interne (2) est rempli avec les corps de roulement à rouleaux (10) réalisés sous forme de rouleaux sphériques de telle sorte que leurs côtés frontaux plus petits reposent sur le côté oblique (26) de la rampe d'appui (22).

10. Procédé de montage d'un palier à rouleaux à contact oblique selon l'une quelconque des revendications 1 à 8, dans lequel le palier à rouleaux à contact oblique (1) est monté selon un procédé de montage excentrique connu en soi en tant que procédé de montage pour des roulements rainurés à billes, **caractérisé en ce que**
- dans une première étape, la bague de palier externe (6) est placée avec son côté frontal réalisé avec le bord (9) sur un plan de montage horizontal (21) avec une rampe d'appui convexe en forme de croissant (23) de telle sorte qu'elle s'applique avec son bord (9) contre le côté de diamètre extérieur (25) de la rampe d'appui (23),
- dans une deuxième étape, la bague de palier interne (2) est disposée avec son côté frontal réalisé avec le bord (5) vers le haut de manière excentrée par rapport à la bague de palier externe (6), de telle sorte que d'une part la rampe d'appui (23) soit disposée entre les bagues de palier (2, 6) et que d'autre part les bagues de palier (2, 6) s'appliquent l'une contre l'autre de manière décalée de 180° par rapport au milieu de la rampe d'appui (23),
- dans une troisième étape, l'espace libre en forme de croissant obtenu entre la bague de palier interne (2) et la bague de palier externe (6) est rempli avec les corps de roulement à rouleaux (10) réalisés sous forme de rouleaux sphériques de telle sorte que leurs côtés frontaux plus grands reposent sur le côté oblique (27) de la rampe d'appui (23).

11. Procédé selon la revendication 9 ou 10, **caractérisé en ce que** dans une quatrième étape, la bague de palier externe (3) est serrée au niveau du point de contact avec la bague de palier interne (2) et au niveau d'un point décalé de 180° par rapport au point de contact sur sa surface d'enveloppe extérieure de telle sorte que la bague de palier externe (3) soit légèrement ovalisée à l'intérieur de ses limites d'élasticité.

12. Procédé selon la revendication 11, **caractérisé en ce que** dans une cinquième étape, la bague de palier interne (2) est déplacée dans une position coaxiale avec la bague de palier externe (3) et les corps de roulement à rouleaux (10) sont répartis uniformément sur la périphérie dans leurs chemins de roulement (4, 8) dans les bagues de palier (2, 6) en supprimant l'ovalisation de la bague de palier externe (3).

13. Procédé selon la revendication 12, **caractérisé en ce que** dans une sixième étape, la cage de palier (11) réalisée sous forme de cage à doigts est introduite avec ses nervures de cage (13) entre les corps de roulement à rouleaux (10) depuis le côté avec ses côtés frontaux plus petits et est encliquetée avec ses ergots d'encliquetage au niveau de la surface intérieure du bord (5) au niveau de la bague de palier interne (2).

14. Procédé selon la revendication 12, **caractérisé en ce que** dans une sixième étape, la cage de palier (11) réalisée sous forme de cage à doigts est introduite avec ses nervures de cage (13) entre les corps de roulement à rouleaux (10) depuis le côté avec ses côtés frontaux plus grands et est encliquetée avec ses nervures d'encliquetage (14) au niveau de la surface intérieure (15) du bord (9) au niveau de la bague de palier externe (6).

15. Procédé selon la revendication 13 ou 14, **caractérisé en ce que** dans une étape subséquente, l'espace interne de palier (20) est rempli et les deux rondelles d'étanchéité en élastomère (18, 19) sont introduites dans les rainures de fixation périphériques (16, 17) dans les portions cylindriques (7.1, 7.2) de la surface d'enveloppe intérieure (7) de la bague de palier externe (6).

16. Dispositif pour mettre en oeuvre le procédé selon la revendication 9, **caractérisé en ce que** la rampe d'appui (22) s'appliquant avec son côté de diamètre intérieur (24) contre la bague de palier interne (2) présente un côté oblique (26) se rétrécissant vers la bague de palier externe (3) avec l'angle d'inclinaison du chemin de roulement (4) dans la bague de palier interne (2) et présente également une hauteur de rampe maximale (h_{R}) qui correspond à la hauteur de bord (h_{BI}) au niveau de la bague de palier interne (2).

17. Dispositif pour mettre en oeuvre le procédé selon la revendication 10, **caractérisé en ce que** la rampe d'appui (23) s'appliquant avec son côté de diamètre extérieur (25) contre la bague de palier externe (6) présente un côté oblique (27) se rétrécissant vers la bague de palier interne (2) avec l'angle d'inclinaison du chemin de roulement (8) dans la bague de palier externe (6) et présente également une hauteur de rampe maximale (h_{R}) qui correspond à la hauteur de bord (h_{BA}) au niveau de la bague de palier externe (6).
